# EUROPEAN PATENT APPLICATION

(11) **EP 2 928 256 A1**
(43) Date of publication of application: **07.10.2015**
(21) Application number: 13859157.3
(22) Date of filing: 05.11.2013
(51) Int. Cl.: H04W 76/02

(54) **MOBILE COMMUNICATION METHOD, WIRELESS BASE STATION, AND MOBILE STATION**

(30) Priority: 29.11.2012 JP 2012260990
(71) Applicant: NTT DOCOMO, INC., Chiyoda-ku Tokyo 100-6150 (JP)
(72) Inventor: UCHINO, Tooru, Tokyo 100-6150 (JP); HANAKI, Akihito, Tokyo 100-6150 (JP); HAPSARI, Wuri Andarmawanti, Tokyo 100-6150 (JP)
(74) Representative: Hoffmann Eitle
(86) International application number: PCT/JP2013/079864
(87) International publication number: WO 2014/084005

(57) **Abstract**

Time for establishing a U-plane can be reduced and wasting a physical downlink control channel (PDCCH) is avoided in "RRC Re-establishment procedure." " A mobile communication method of the invention includes transmitting, by a mobile station UE, "RRC connection re-establishment request" to a radio base station eNB in response to "RA response, " and transmitting, by the radio base station eNB, "RRC connection re-establishment" , which instructs to establish DRB together with SRB1/SRB2, to the mobile station UE in response to the "RRC connection re-establishment request."

## Description

### TECHNICAL FIELD

The present invention relates to a mobile communication method, a radio base station, and a mobile station.

### BACKGROUND ART

In LTE (Long Term Evolution), "RRC Re-establishment procedure" is defined as being carried out by a mobile station UE and a radio base station eNB in order to re-establish a radio link with the radio base station eNB when the mobile station UE detects a failure in the radio link with the radio base station eNB (see Non-patent document 1.)

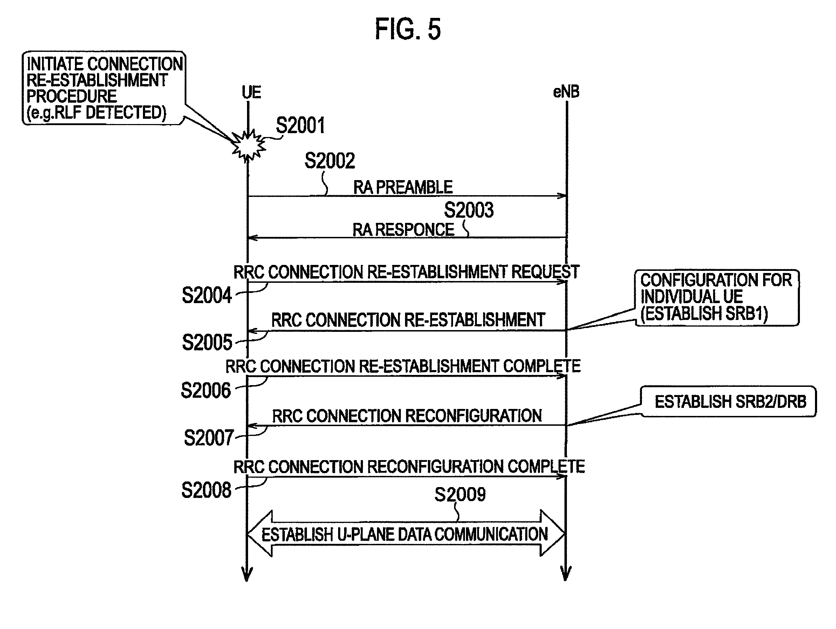

The "RRC Re-establishment procedure" will be described below with reference to Fig. 5.

As shown in Fig. 5, in step S2001, when the mobile station UE detects a failure in a radio link with the radio base station eNB (RLF: radio link failure), the mobile station UE decides to initiate the "RRC Re-establishment procedure." In step S2002, the mobile station UE transmits "RA (Random Access) preamble" to the radio base station eNB.

In step S2003, the radio base station eNB transmits "RA response" to the mobile station UE in response to the "RA preamble."

In step S2004, the mobile station UE transmits "RRC connection re-establishment request" to the radio base station eNB in response to the "RA response."

In step S2005, the radio base station eNB transmits "RRC connection re-establishment" to the mobile station UE in response to the "RRC connection re-establishment request."

Here, the radio base station eNB uses the "RRC connection re-establishment" to instruct the mobile station UE to establish SRB1 (Signalling Radio Bearer 1).

In step S2006, the mobile station UE performs processing for establishing the SRB1 in response to the "RRC connection re-establishment" and transmits "RRC connection re-establishment complete" to the radio base station eNB.

In step S2007, the radio base station eNB transmits "RRC connection reconfiguration" to the mobile station UE in response to the "RRC connection re-establishment complete."

Here, the radio base station eNB uses the "RRC connection reconfiguration" to instruct the mobile station UE to establish SRB2 and DRB (Data Radio Bearer).

In step S2008, the mobile station UE performs processing for establishing the SRB2 and the DRB in response to the "RRC connection reconfiguration" and transmits "RRC connection reconfiguration complete" to the radio base station eNB.

In step S2009, a U-plane is established between the mobile station UE and the radio base station eNB.

### PRIOR ART DOCUMENT

### NON-PATENT DOCUMENT

Non-patent document 1: 3GPP 36.300

### SUMMARY OF THE INVENTION

The inventors have found the following problem and considered a solution to the problem.

As described above, the conventional "RRC Re-establishment procedure" includes "RRC connection reconfiguration procedure (steps S2007 and S2008)."

Accordingly, the conventional "RRC Re-establishment procedure" has a problem that it takes a long time to establish the U-plane, which may waste a physical downlink control channel (PDCCH).

Here, the "RRC connection reconfiguration procedure" aims only at establishing the SRB2 and the DRB between the radio base station eNB and the mobile station UE.

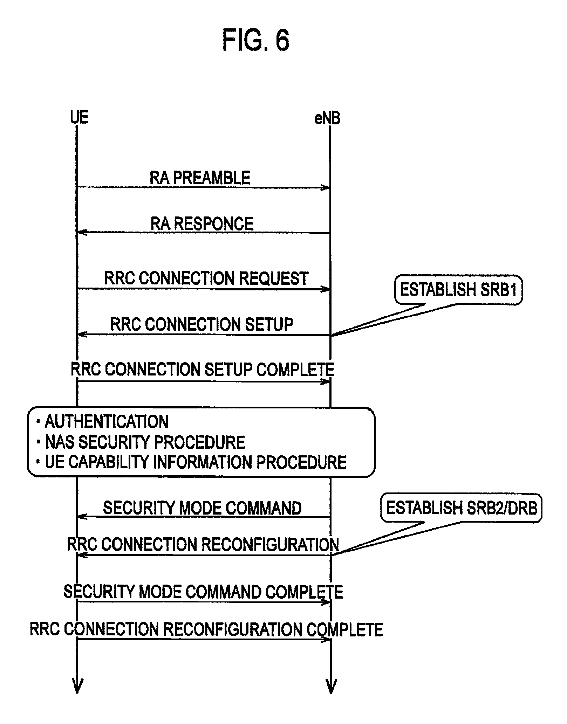

On the other hand, Fig. 6 shows a sequence in "Initial Access procedure" to be carried out in a transition from RRC_Idle state to RRC_Connected state.

In LTE, the "Initial Access procedure" requires the "RRC connection reconfiguration procedure" because it is necessary to establish the SRB1, the SRB2, and the DRB in a state where no radio links (RRC connections) are established at all.

In LTE, the sequence in the "RRC Re-establishment procedure" is considered to be defined in reference to the sequence in the "Initial Access procedure" as a reference.

Accordingly, if the SRB2 and the DRB can be established in the "RRC Re-establishment procedure" without using the "RRC connection reconfiguration procedure," then it is considered possible to omit the "RRC connection reconfiguration procedure," to reduce time for establishing the U-plane, and to avoid wasting the physical downlink control channel (PDCCH) .

The present invention has been made in view of the aforementioned problem. An objective of the present invention is to provide a mobile communication method, a radio base station, and a mobile station, which can reduce time for establishing a U-plane and avoid wasting a physical downlink control channel (PDCCH) in "RRC Re-establishment procedure."

A first aspect of the present invention is summarized as a mobile communication method including: transmitting, by a mobile station, a random access preamble to a radio base station when the mobile station decides to initiate a connection re-establishment procedure; transmitting, by the radio base station, a random access response to the mobile station in response to the random access preamble; transmitting, by the mobile station, a connection re-establishment request to the radio base station in response to the random access response; and transmitting, by the radio base station, a connection re-establishment response, which instructs to establish a data radio bearer together with a signalling radio bearer, to the mobile station in response to the connection re-establishment request.

A second aspect of the present invention is summarized as a radio base station including: a reception unit configured to receive a connection re-establishment request from a mobile station in a connection re-establishment procedure; and a transmission unit configured to transmit a connection re-establishment response, which instructs to establish a data radio bearer together with a signalling radio bearer, to the mobile station in response to the connection re-establishment request.

A third aspect of the present invention is summarized as a mobile station including: a reception unit configured to receive a connection re-establishment response from a radio base station in a connection re-establishment procedure; and an establishment unit configured to establish a data radio bearer together with a signalling radio bearer in response to an instruction included in the connection re-establishment response.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a mobile station according to the first embodiment of the present invention.
[Fig. 3] Fig. 3 is a functional block diagram of a radio base station according to the first embodiment of the present invention.
[Fig. 4] Fig. 4 is a sequence diagram showing operations of the mobile communication system according to the first embodiment of the present invention.
[Fig. 5] Fig. 5 is a diagram for explaining the related art.
[Fig. 6] Fig. 6 is a diagram for explaining the related art.

### MODE FOR CARRYING OUT THE INVENTION

### (Mobile Communication System of First Embodiment of Invention)

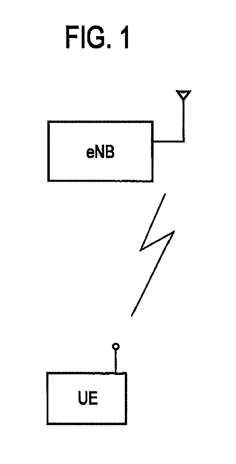

A mobile communication system according to a first embodiment of the present invention will be described with reference to Fig. 1 to Fig. 4.

The mobile communication system of the embodiment is an LTE mobile communication system, which includes a radio base station eNB and a mobile station UE as shown in Fig. 1.

In the mobile communication system of the embodiment, the mobile station UE is assumed to be in RRC**_**Connected state in a cell under the control of the radio base station eNB.

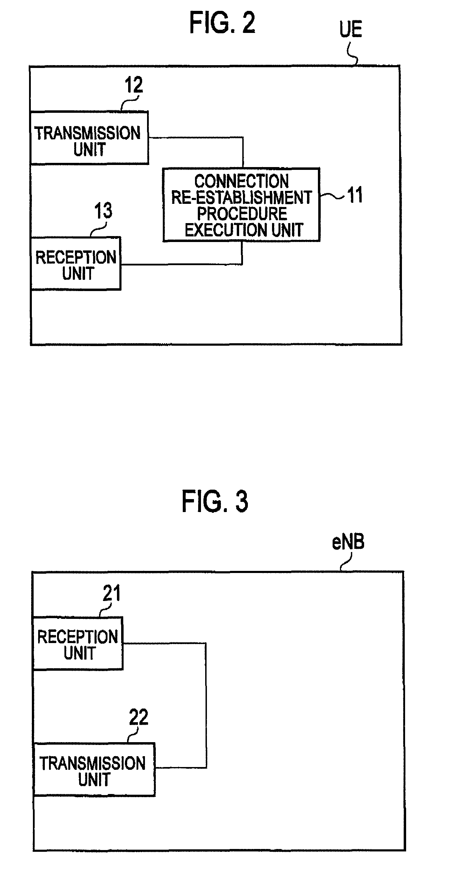

As shown in Fig. 2, the mobile station UE of the embodiment includes a connection re-establishment procedure execution unit 11, a transmission unit 12, and a reception unit 13.

The connection re-establishment procedure execution unit 11 is configured to execute "RRC Re-establishment procedure" when a predetermined trigger is detected. Here, the "RRC Re-establishment procedure" is a procedure for re-establishing connection to a radio link, which has been established between the mobile station UE and the radio base station eNB.

For example, the connection re-establishment procedure execution unit 11 is configured to execute the "RRC Re-establishment procedure" when an RLF is detected in the radio link which has been established between the mobile station UE and the radio base station eNB.

The transmission unit 12 is configured to transmit various signals to the radio base station eNB. The reception unit 13 is configured to receive various signals from the radio base station eNB.

For example, the transmission unit 12 is configured to transmit "RA preamble," "RRC connection re-establishment request, " and "RRC connection re-establishment complete" to the radio base station eNB in the "RRC Re-establishment procedure. "

Meanwhile, the reception unit 13 is configured to receive "RA response" and "RRC connection re-establishment" from the radio base station eNB in the "RRC Re-establishment procedure. "

Here, the connection re-establishment procedure execution unit 11 is configured to establish DRB together with SRB1 and SRB2 in response to an instruction included in the "RRC connection re-establishment" received by the reception unit 13.

As shown in Fig. 3, the radio base station eNB includes a reception unit 21 and a transmission unit 22.

The reception unit 21 is configured to receive the various signals from the mobile station UE. The transmission unit 22 is configured to transmit the various signals to the mobile station UE.

For example, the reception unit 21 is configured to receive the "RApreamble, " the "RRC connection re-establishment request," and the "RRC connection re-establishment complete" from the mobile station UE in the "RRC Re-establishment procedure."

The transmission unit 22 is configured to transmit the "RA response" and the "RRC connection re-establishment" to the mobile station UE in the "RRC Re-establishment procedure."

Here, the transmission unit 22 is configured to transmit the "RRC connection re-establishment," which instructs to establish the DRB together with the SRB1 and the SRB2, to the mobile station UE in response to the "RRC connection re-establishment request" received by the reception unit 21.

Meanwhile, the transmission unit 22 is configured to transmit the "RRC connection re-establishment," which instructs to establish only the SRB1, to the mobile station UE in response to the "RRC connection re-establishment request" received by the reception unit 21 in the "Initial Access procedure."

In addition, the transmission unit 22 is configured to transmit the "RRC connection reconfiguration," which instructs to establish the SRB2 and the DRB, to the mobile station UE in response to the "RRC connection re-establishment complete" received by the reception unit 21 in the "Initial Access procedure."

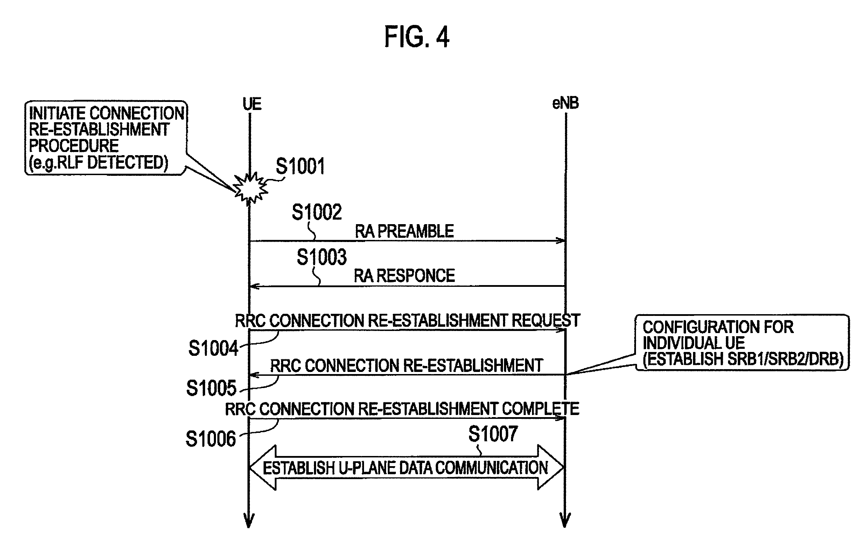

Operations of the mobile communication system of the embodiment will be described below with reference to Fig. 4.

As shown in Fig. 4, in step S1001, when the mobile station UE detects a radio link failure (RLF) with the radio base station eNB, the mobile station UE decides to initiate the "RRC Re-establishment procedure." In step S1002, the mobile station UE transmits the "RA preamble" to the radio base station eNB.

In step S1003, the radio base station eNB transmits the "RA response" to the mobile station UE in response to the "RA preamble."

In step S1004, the mobile station UE transmits the "RRC connection re-establishment request" to the radio base station eNB in response to the "RA response."

In step S1005, the radio base station eNB transmits the "RRC connection re-establishment" to the mobile station UE in response to the "RRC connection re-establishment request."

Here, the radio base station eNB uses the "RRC connection re-establishment" to instruct the mobile station UE to establish the SRB2 and the DRB in addition to the SRB1.

In step S1006, the mobile station UE performs processing for establishing the SRB1, the SRB2, and the DRB in response to the "RRC connection re-establishment" and transmits the "RRC connection re-establishment complete" to the radio base station eNB.

Thereafter, in step S1009, the mobile station UE and the radio base station eNB establish a U-plane therebetween without carrying out the "RRC connection reconfiguration procedure."

According to the mobile communication system of the embodiment, when the "RRC Re-establishment procedure" is carried out, the radio base station eNB can instruct the mobile station UE to establish the SRB2 and the DRB in addition to the SRB1, by use of the "RRC connection re-establishment" instead of carrying out the "RRC connection reconfiguration procedure. "

As a consequence, it is possible to reduce time for establishing the U-plane and to avoid wasting a physical downlink control channel (PDCCH) in the "RRC Re-establishment procedure."

The above-described features of the embodiment may also be expressed as follows.

A first aspect of this embodiment is summarized as a mobile communication method including: transmitting, by a mobile station UE, "RA preamble (random access preamble) " to a radio base station eNB when the mobile station UE decides to initiate "RRC Re-establishment procedure (connection re-establishment procedure) ; transmitting, by the radio base station eNB, "RA response (random access response)" to the mobile station UE in response to the "RA preamble;" transmitting, by the mobile station UE, "RRC connection re-establishment request (connection re-establishment request)" to the radio base station UE in response to the "RA response;" and transmitting, by the radio base station eNB, "RRC connection re-establishment (connection re-establishment response)," which instructs to establish DRB (data radio bearer) together with SRB1/SRB2 (signalling radio bearer), to the mobile station UE in response to the "RRC connection re-establishment request."

A second aspect of this embodiment is summarized as a radio base station eNB including: a reception unit 21 configured to receive a "RRC connection re-establishment request" from a mobile station UE in "RRC Re-establishment procedure;" and a transmission unit 22 configured to transmit "RRC connection re-establishment" which instructs to establish DRB together with SRB1/SRB2, to the mobile station UE in response to the "RRC connection re-establishment request."

A third aspect of this embodiment is summarized as a mobile station UE including: a reception unit 13 configured to receive "RRC connection re-establishment complete" from a radio base station eNB in "RRC Re-establishment procedure;" and a connection re-establishment procedure execution unit 11 (establishment unit) configured to establish DRB together with SRB1/SRB2 in response to an instruction included in the "RRC connection re-establishment."

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2012-260990 (filed on November 29, 2012) is incorporated by reference in the present specification.

### INDUSTRIAL APPLICABILITY

As described above, according to the present invention, it is possible to provide a mobile communication method, a radio base station, and a mobile station, which can reduce time for establishing a U-plane and avoid wasting a physical downlink control channel (PDCCH) in "RRC Re-establishment procedure."

### EXPLANATION OF THE REFERENCE NUMERALS

eNB radio base station
UE mobile station
11 connection re-establishment procedure execution unit
12, 22 transmission unit
13, 21 reception unit

## Claims

1. A mobile communication method comprising:
transmitting, by a mobile station, a random access preamble to a radio base station when the mobile station decides to initiate a connection re-establishment procedure;
transmitting, by the radio base station, a random access response to the mobile station in response to the random access preamble;
transmitting, by the mobile station, a connection re-establishment request to the radio base station in response to the random access response; and
transmitting, by the radio base station, a connection re-establishment response, which instructs to establish a data radio bearer together with a signalling radio bearer, to the mobile station in response to the connection re-establishment request.

2. A radio base station comprising:
a reception unit configured to receive a connection re-establishment request from a mobile station in a connection re-establishment procedure; and
a transmission unit configured to transmit a connection re-establishment response, which instructs to establish a data radio bearer together with a signalling radio bearer, to the mobile station in response to the connection re-establishment request.

3. A mobile station comprising:
a reception unit configured to receive a connection re-establishment response from a radio base station in a connection re-establishment procedure; and
an establishment unit configured to establish a data radio bearer together with a signalling radio bearer in response to an instruction included in the connection re-establishment response.
